(19) Europäisches Patentamt
European Patent Office
Office européen des brevets

(11) **EP 4 488 646 A1**

(12) **EUROPEAN PATENT APPLICATION**

(43) Date of publication:
**08.01.2025 Bulletin 2025/02**

(21) Application number: **23183375.7**

(22) Date of filing: **04.07.2023**

(51) International Patent Classification (IPC):
**G01M 3/18** (2006.01)    **B60L 58/26** (2019.01)
**H01M 10/613** (2014.01)

(52) Cooperative Patent Classification (CPC):
**G01M 3/188; B60L 58/26; H01M 10/613;**
**H01M 10/625; H01M 10/6567; H01M 10/6568;**
H01M 2220/20

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **VOLVO TRUCK CORPORATION**
**405 08 Göteborg (SE)**

(72) Inventors:
• **Xu, Yang**
**417 47 Göteborg (SE)**
• **Friberg, Olle**
**434 46 Kungsbacka (SE)**

(74) Representative: **Valea AB**
**Box 1098**
**405 23 Göteborg (SE)**

(54) **AN ARRANGEMENT FOR LEAKAGE DETECTION IN A COOLING SYSTEM**

(57)    An arrangement (100) configured to detect leakage of a liquid coolant from a cooling circuit (203), such as of a cooling system (200) of a battery pack (300) in a vehicle, the arrangement comprising:
- a sensor assembly (104) configured to measure an electric parameter between an inlet (201) and an outlet (202) of the cooling circuit, the electric parameter being dependent on an amount of liquid coolant present between the inlet and outlet, wherein the sensor assembly comprises a pair of probes (101, 102), and
- an electronic control unit (103) configured to receive data comprising the measured electric parameter from the sensor assembly and to determine whether the measured electric parameter between the inlet and the outlet is indicative of a leakage of liquid coolant from the cooling circuit.

Fig. 2

**Description**

**TECHNICAL FIELD**

The disclosure relates generally to leakage detection in liquid cooling systems, such as in vehicles. In particular aspects, the disclosure relates to an arrangement configured to detect leakage of a liquid coolant from a cooling circuit, a cooling system, a battery pack, a vehicle, and a method for detecting leakage of a liquid coolant from a cooling circuit. The disclosure can be applied to heavy-duty vehicles, such as trucks, buses, and construction equipment, among other vehicle types. The disclosure may also be applied in marine vessels and in stationary applications. Although the disclosure may be described with respect to a particular vehicle, the disclosure is not restricted to any particular vehicle.

**BACKGROUND**

In fully or partially electrified vehicles, batteries are provided for storing electric energy needed for the propulsion of the vehicle. The batteries require cooling to maintain a desired working temperature of the battery cells and to protect them from overheating. Liquid cooling systems are often provided for this purpose, where a liquid coolant is used to efficiently dissipate heat generated by the battery cells. Leakage of liquid coolant from the cooling system may however lead to short-circuits and severe damage of the battery, and hazardous situations may occur as a result thereof. It is therefore crucial that leakages from such liquid cooling systems can be quickly and reliably detected.

**SUMMARY**

According to a first aspect of the disclosure, an arrangement configured to detect leakage of a liquid coolant from a cooling circuit is provided, the arrangement comprising:

- a sensor assembly configured to measure an electric parameter between an inlet and an outlet of the cooling circuit, the electric parameter being dependent on an amount of liquid coolant present between the inlet and the outlet, wherein the sensor assembly comprises a pair of probes, and
- an electronic control unit configured to receive data comprising the measured electric parameter from the sensor assembly and to determine whether the measured electric parameter between the inlet and the outlet is indicative of a leakage of liquid coolant from the cooling circuit.

The first aspect of the disclosure may seek to provide an in at least some aspect improved arrangement for detecting leakage of liquid coolant from a cooling circuit, such as in a cooling system for cooling a battery pack in a vehicle. A technical benefit may include that leakage detection is possible in cases where slow and continuous leakage is present and regardless of whether any isolation fault occurs as a result of the leakage.

Optionally in some examples, including in at least one preferred example, the pair of probes comprises a first probe configured to be positioned in the inlet of the cooling circuit and a second probe configured to be positioned in the outlet of the cooling circuit. A technical benefit may include an accurate measurement of the electric parameter, such as the voltage, between the inlet and outlet using the first and second probes. Furthermore, when the inlet and outlet are those of a cooling circuit in a battery pack, this placement of the probes makes it possible to mount and/or replace the probes without having to disassemble the battery pack. Service, retrofitting and replacement may thus be facilitated.

Optionally in some examples, including in at least one preferred example, the sensor assembly is a voltage sensor assembly, such as a resistive voltage sensor or a capacitive voltage sensor. The measured electric parameter is hence a voltage indicative of either resistance or capacitance between the pair of probes, the capacitance or resistance being dependent on the amount of liquid coolant within the cooling circuit. A technical benefit may include a space efficient sensor assembly providing quick and accurate detection of the amount of liquid coolant. In other examples, the sensor assembly may be a current sensor assembly.

Optionally in some examples, including in at least one preferred example, the electronic control unit is configured to determine whether the measured electric parameter between the inlet and the outlet is indicative of a leakage by using a model of the cooling circuit to determine an amount of liquid coolant within the cooling circuit. The model may be a mathematical model of the cooling circuit. The model may relate the measured electric parameter between the inlet and outlet to the amount of coolant present within the cooling circuit, such as between the inlet and the outlet. A technical benefit may include that an accurate determination of a leakage may be achieved without having access to reference data at the time of the measurement.

Optionally in some examples, including in at least one preferred example, the model is a mathematical model which describes the amount of liquid coolant within the cooling circuit as a polynomial function of the measured electric parameter between the inlet and the outlet. A technical benefit may include that a sufficiently accurate model may be achieved, which is relatively computationally efficient. An order of the polynomial function may be selected such that a desired accuracy is achieved. Polynomial fitting may be carried out during a calibration procedure for the specific cooling circuit.

Optionally in some examples, including in at least one preferred example, the electronic control unit is configured to detect a leakage of the liquid coolant from the cooling circuit by comparing the determined amount of liquid coolant to a threshold value. A straightforward way of detecting a leakage may thereby be achieved.

Optionally in some examples, including in at least one preferred example, the electronic control unit is configured to determine whether the measured electric parameter between the inlet and the outlet is indicative of a leakage by using predetermined reference data. By way of example, the reference data may be provided in a look-up table. The reference data may be data collected during a calibration process.

Optionally in some examples, including in at least one preferred example, the electronic control unit is configured to determine whether the measured electric parameter between the inlet and the outlet is indicative of a leakage by using predetermined reference data relating the measured electric parameter to an amount of liquid coolant. Optionally, the reference data may be provided in a look-up table.

Optionally in some examples, including in at least one preferred example, the sensor assembly is configured to continuously monitor the electric parameter between the inlet and the outlet, or to measure the electric parameter between the inlet and the outlet with a predetermined frequency. A technical benefit may include a quick and early detection of leakage.

Optionally in some examples, including in at least one preferred example, the electronic control unit is further configured to determine an amount of liquid coolant leakage from the cooling circuit based on the measured electric parameter. A technical benefit may include that a quantification of the leakage may be provided, facilitating for an operator to take appropriate action. A calibrated model, such as a mathematical model of the cooling circuit, may preferably be used for such quantitative determination.

Optionally in some examples, including in at least one preferred example, the arrangement is configured to be used for detecting leakage from the cooling circuit while liquid coolant is circulated through the cooling circuit. A technical benefit may include that leakage may be detected during the actual use of the cooling system, and not merely during service or similar.

Optionally in some examples, including in at least one preferred example, the cooling circuit is configured for cooling of a battery pack.

According to a second aspect of the disclosure, a cooling system comprising a cooling circuit having an inlet and an outlet, and the arrangement of the first aspect is provided. The first probe is positioned in the inlet and the second probe is positioned in the outlet. The second aspect of the disclosure may seek to provide a cooling system in which detection of leakage of liquid coolant is facilitated. A technical benefit may include that, thanks to the positioning of the probes in the inlet and outlet, respectively, an accurate determination of the amount of liquid coolant in the cooling circuit is enabled. Another technical benefit may include that service, retrofitting and replacement of the probes may be carried out without having to disassemble the component in which the cooling circuit is provided.

According to a third aspect of the disclosure, a battery pack is provided. The battery pack comprises a plurality of battery cells, a cooling circuit configured to cool the plurality of battery cells and having an inlet and an outlet for circulating liquid coolant through the cooling circuit, and the arrangement of the first aspect configured to detect leakage of the liquid coolant from the cooling circuit. The battery pack may be a battery pack of a vehicle. The third aspect of the disclosure may seek to provide a battery pack in which the risk of short-circuits and severe damage of the battery pack due to, e.g., thermal runaway may be mitigated. A technical benefit may include that a fast and early detection of leakage of liquid coolant may be achieved, hence reducing the risk of overheating of the battery pack.

According to a fourth aspect of the disclosure, a vehicle comprising the cooling system according to the second aspect, and/or the battery pack according to the third aspect, is provided. The vehicle may comprise several battery packs according to the third aspect. The vehicle may be an electric vehicle comprising at least one battery pack configured to provide electric power for propulsion of the vehicle.

According to a fifth aspect of the disclosure, a method for detecting leakage of a liquid coolant from a cooling circuit is provided. The method comprises:

- measuring an electric parameter between an inlet and an outlet of the cooling circuit using a sensor assembly comprising a pair of probes,
- in an electronic control unit, receiving data comprising the measured electric parameter from the sensor assembly, and
- in the electronic control unit, determining whether the measured electric parameter between the inlet and the outlet is indicative of a leakage of liquid coolant from the cooling circuit. Advantages and advantageous features associated with the fifth aspect are largely analogous to advantages and advantageous features of the first aspect. The method is particularly useful for detecting leakage from a coolant circuit of a battery pack, such as in a vehicle.

Optionally in some examples, including in at least one preferred example, determining whether the measured electric parameter between the inlet and the outlet is indicative of a leakage comprises using a model of the cooling circuit to determine an amount of liquid coolant within the cooling circuit.

Optionally in some examples, including in at least one preferred example, the method further comprises, in the electronic control unit, determining an amount of liquid coolant leakage from the cooling circuit based on the measured electric parameter.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

## BRIEF DESCRIPTION OF THE DRAWINGS

Examples are described in more detail below with reference to the appended drawings.

FIG. 1 is an exemplary vehicle in which an arrangement according to an example of the disclosure may be applied.
FIG. 2 is a schematic illustration of a battery pack comprising an arrangement according to an example of the disclosure.
FIG. 3 is a schematic diagram of a sensor assembly according to an example.
FIG. 4 is a flow chart illustrating a method according to an example of the disclosure.
FIG. 5 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

Battery packs require cooling to maintain a desired working temperature of battery cells within the battery packs and to protect them from overheating. This is particularly important in electric vehicle applications, in which overheating of the battery packs used for propulsion of the vehicle may lead to severe risks for a driver and/or passengers of the vehicle. Liquid cooling systems are often provided for cooling of the battery packs, where a liquid coolant is used to dissipate heat generated by the battery cells. A cooling circuit of the liquid cooling system may be arranged in proximity of the battery cells such that the cooling is as efficient as possible. However, a risk associated with such a liquid cooling system is that leakage of liquid coolant from the cooling circuit may lead to short-circuits of the battery cells, and thereby damages to the battery pack and potentially hazardous situations. It is therefore crucial that leakages from such liquid cooling systems can be quickly and reliably detected.

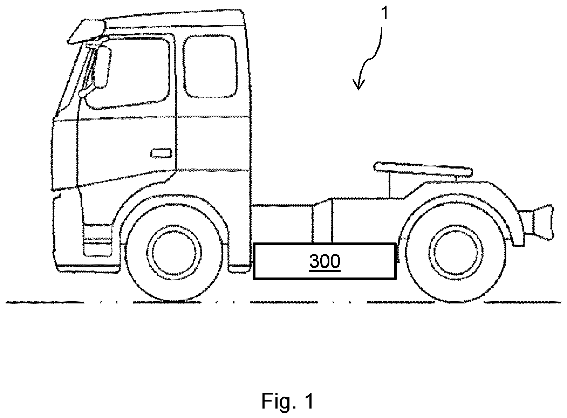

FIG. 1 schematically illustrates a vehicle 1 according to an example of the disclosure. The vehicle 1 is in the form of a heavy-duty truck comprising at least one battery pack 300 providing electric power for propulsion of the vehicle 1. The vehicle 1 may be a partially or a fully electric vehicle, and it may comprise several battery packs 300, such as two, three or four battery packs. The present disclosure is however not only applicable to this type of vehicle but may also be used in many other types of electrically operated vehicles and vessels, such as other trucks, buses, passenger cars, construction equipment, including but not limited to wheel loaders, dump trucks, excavators, etc. It is further applicable to stationary applications comprising battery packs, such as stationary machinery, and/or stationary energy sources for providing electric power to an electrical consumer.

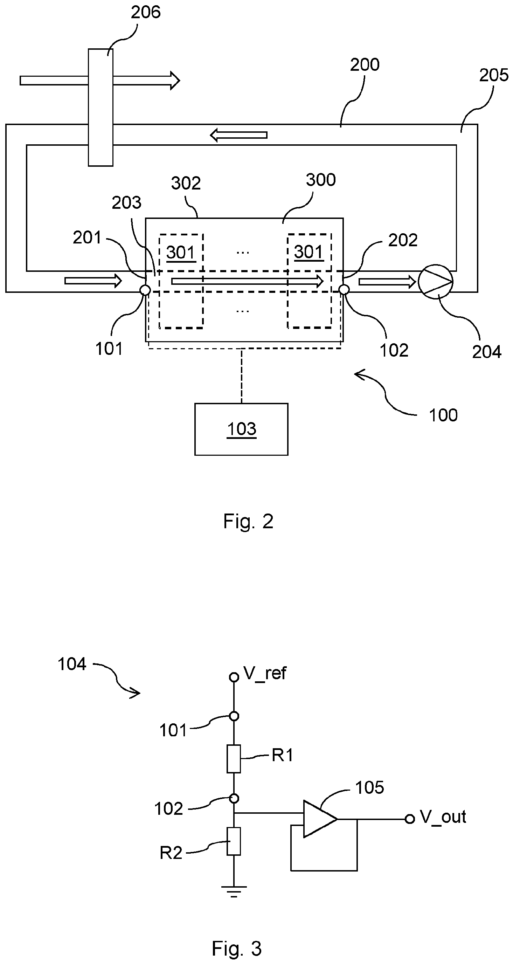

FIG. 2 is a schematic view of a battery pack 300, such as the battery pack illustrated in FIG. 1, and a liquid cooling system 200 configured to cool the battery pack 300. The battery pack 300 comprises a plurality of battery cells 301 arranged in a housing 302 of the battery pack 300, such as several hundreds of battery cells 301. The battery cells 301 may be connected in series and/or in parallel to provide an output DC voltage having a desired voltage level. Suitably, the battery cells 301 are of lithium-ion type, but other types may also be used. The number of battery cells 301 per battery pack 300 may typically be in the range of 50 to 500 battery cells. The battery cells 301 may be grouped in battery modules (not shown) within the housing 302, the battery modules being connected in series or in parallel.

The liquid cooling system 200 comprises at least one conduit 205 configured for circulation of liquid coolant via a cooling circuit 203, passing through the battery pack 300. Common liquid coolants that may be used include, e.g., ethylene glycol based liquid coolants and propylene glycol based liquid coolants. The cooling system 200 may further comprise a heat exchanger 206 for cooling of the liquid coolant within the conduit 205. The heat exchanger 206 may be any kind of heat exchanger suitable for the purpose, such as a liquid-to-liquid heat exchanger or an air-to-liquid heat exchanger. One or more pumps 204 may be provided for circulating the liquid coolant within the conduit 205.

The cooling circuit 203 passing through the battery pack 300 comprises an inlet 201 via which the liquid coolant enters the cooling circuit 203 and an outlet 202 via which the liquid coolant exits the cooling circuit 203. The cooling circuit 203 is herein schematically shown as a straight conduit, although of course the cooling conduit may have any shape suitable for cooling the battery cells 301 within the battery pack 300. The cooling conduit 203 may comprise a single branch which may be arranged to pass all battery cells 301, or, in some cases, a plurality of branches, e.g., one branch per each battery module within the battery pack 300.

An arrangement 100 configured to detect leakage of liquid coolant from the cooling circuit 203 within the battery pack 300 is further provided. The arrangement 100 comprises a sensor assembly configured to measure an electric parameter between the inlet 201 and the outlet 202 of the cooling circuit 203, the electric parameter being dependent on an amount of liquid coolant present between the inlet 201 and the outlet 202. The electric parameter could, e.g., be an electrical resistance or a capacitance between the inlet 201 and the outlet 202. The sensor assembly comprises a pair of probes 101, 102, which are herein a first voltage probe 101 positioned in the inlet 201 and a second voltage probe 102 positioned in the outlet 202.

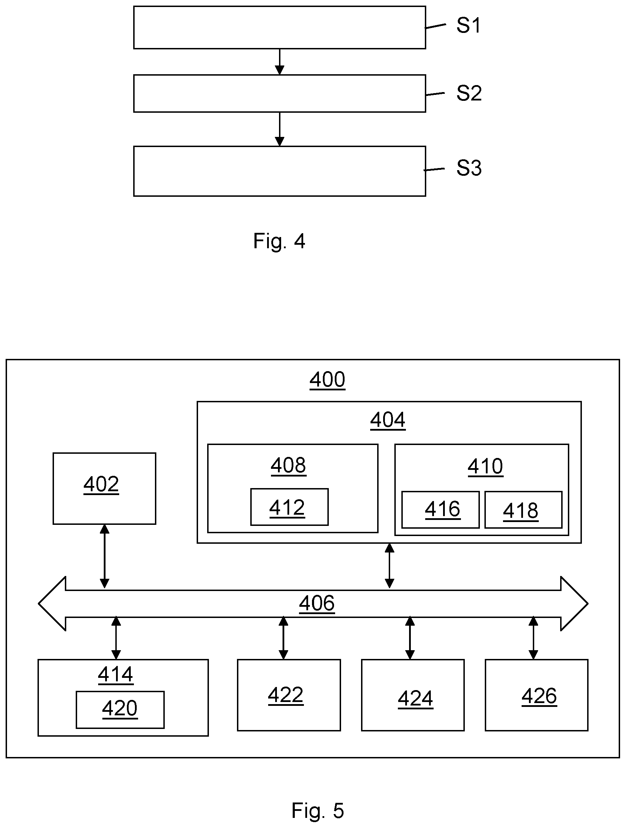

An electronic control unit 103 configured to receive data comprising the measured electric parameter from the sensor assembly and to determine whether the measured electric parameter between the inlet 201 and the outlet 202 is indicative of a leakage of liquid coolant from the cooling circuit 203 is further provided. The electronic control unit 103 may be an electronic control unit of the battery pack 300, or a separate electronic control unit. When the vehicle 1 comprises several battery packs 300, a single electronic control unit 103 may be used for determining leakage of liquid coolant from several cooling circuits 203, or one electronic control unit per battery pack 300 / cooling system 200 may be provided. The electronic control unit 103 may be included in a computer system that will be described in detail below with reference to **FIG. 5.**

**FIG. 3** illustrates a sensor assembly 104 in the form of a resistive voltage sensor assembly that may be used to measure electric resistance between the inlet 201 and the outlet 202 by applying a reference voltage V_ref and measuring an output voltage V_out. The voltage probes 101, 102 detect a voltage drop over the cooling circuit 203, having a variable resistance R1 depending on the amount of coolant within the cooling circuit 203. A fixed resistance R2 is provided between the second probe 102 and ground, and an amplifier 105 is arranged to buffer the input signal. The output voltage V_out will depend on the amount of coolant within the cooling circuit 203. If a leakage occurs, the output voltage V_out will change. Hence, the resistive voltage sensor assembly 104 may be used in the arrangement 100 illustrated in **FIG. 2.**

In other examples, the sensor assembly may be a capacitive voltage sensor assembly, or a current sensor assembly, or any other type of sensor assembly that may be used to determine an electric parameter indicative of the amount of liquid present within the cooling circuit 203. Regardless of which type of sensor assembly is used, it may be configured to continuously monitor the electric parameter between the inlet 201 and the outlet 202, or to measure the electric parameter between the inlet 201 and the outlet 202 with a predetermined frequency. The monitoring and detection may thus take place during actual use of the cooling system 200, such as when the vehicle 1 is travelling and the battery pack 300 is providing propulsion power.

Measurement data from the sensor assembly may be filtered to remove high frequency noise before determining whether the measured electric parameter between the inlet 201 and the outlet 202 is indicative of a leakage of liquid coolant from the cooling circuit 203.

The electronic control unit 103 may be configured to determine whether the measured electric parameter between the inlet 201 and the outlet 202 is indicative of a leakage by using a model of the cooling circuit 203 to determine an amount of liquid coolant within the cooling circuit 203. The model may be a mathematical model which describes the amount of liquid coolant within the cooling circuit 203 as a function of the electric parameter measured between the inlet 201 and the outlet 202, such as a polynomial function. By way of example, when the sensor assembly 104 is a voltage sensor assembly, the polynomial function may be expressed as

$$f(V\_out) = a_n V\_out^n + a_{n-1} V\_out^{n-1} + ... + a_1 V\_out + a_0.$$

The order of the polynomial function may be set to ensure an accurate model of the amount of liquid coolant as a function of the voltage V_out. Polynomial fitting, i.e., determination of the coefficients $a_0, ..., a_n$, may be determined by optimization based on laboratory data collected during a calibration of the arrangement 100 for the specific cooling system 200. For example, the coefficients may be found by minimizing:

$(sum_i \|f(V\_out_i)-m_i\|_2)$, where $V\_out_i$ is the measured voltage and $m_i$ is the coolant amount for $i = 1, 2, ..., n$.

The model may be stored in the electronic control unit 103 and used for the determination of leakage. When the vehicle 1 comprises several battery packs 300, the model may be calibrated for the cooling circuit 203 of each battery pack 300. The model may further be determined and calibrated for the specific coolant used in the cooling system 200. Different liquid coolants may give rise to different polynomial functions.

The electronic control unit 103 may be configured to determine an amount of liquid coolant in the cooling circuit 203 by inputting the output voltage V_out to the calibrated model, and detect a leakage of the liquid coolant from the cooling circuit 203 by comparing the determined amount of liquid coolant to a threshold value. In this way, it is possible not only to detect a leakage, but also to detect the amount of liquid coolant that has leaked from the cooling circuit 203.

In some examples, the electronic control unit 103 may instead be configured to determine whether the measured electric parameter between the inlet 201 and the outlet 202 is indicative of a leakage by using predetermined reference data relating the measured electric parameter to an amount of liquid coolant, such as voltage values obtained in a calibration process. The reference data may, e.g., be provided as a look-up table to which the measured voltage is compared.

**FIG. 4** illustrates a method for detecting leakage of a liquid coolant from a cooling circuit 203 according to an example of the disclosure, such as from the coolant circuit 203 illustrated in **FIG. 2**. The method, which may be performed while liquid coolant is circulated through the cooling circuit 203, comprises the following actions:

S1: measuring an electric parameter between an inlet 201 and an outlet 202 of the cooling circuit 203 using a sensor assembly 104 comprising a pair of probes 101, 102. The sensor assembly may be any one of the above-mentioned types. The sensor assembly 104 may continuously monitor the electric parameter, or it may measure the electric parameter with a predetermined frequency.

S2: in an electronic control unit 103, receiving data comprising the measured electric parameter from the sensor assembly 104. The data may be filtered data, or unfiltered data which may be filtered in the electronic control unit 103 to remove high frequency noise.

S3: in the electronic control unit 103, determining whether the measured electric parameter between the inlet 201 and the outlet 202 is indicative of a leakage of liquid coolant from the cooling circuit 203. This may comprise using a model of the cooling circuit 203 to determine an amount of liquid coolant within the cooling circuit 203, as described in detail above, or it may comprise using reference data.

The method may further comprise, in the electronic control unit 103, determining an amount of liquid coolant leakage from the cooling circuit 203 based on the measured electric parameter.

**FIG. 5** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a Local Area Network (LAN), a Controller Area Network (CAN), a FlexRay, a Local Interconnect Network (LIN), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Microcontroller Unit (MCU), a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402**. A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, possible features and feature combinations of the disclosure are presented as a list of numbered examples.

Example 1: An arrangement (100) configured to detect leakage of a liquid coolant from a cooling circuit (203), the arrangement (100) comprising:

- a sensor assembly configured to measure an electric parameter between an inlet (201) and an outlet (202) of the cooling circuit (203), the electric parameter being dependent on an amount of liquid coolant present between the inlet and the outlet, wherein the sensor assembly comprises a pair of probes (101, 102), and
- an electronic control unit (103) configured to receive data comprising the measured electric parameter from the sensor assembly (101, 102) and to determine whether the measured electric parameter between the inlet (201) and the outlet (202) is indicative of a leakage of liquid coolant from the cooling circuit (203).

Example 2: The arrangement of example 1, wherein the pair of probes (101, 102) comprises a first probe (101) configured to be positioned in the inlet (201) of the cooling circuit (203) and a second probe (102) configured to be positioned in the outlet (202) of the cooling circuit (203).

Example 3: The arrangement of example 2, wherein the sensor assembly is a voltage sensor assembly.

Example 4: The arrangement of any of the preceding examples, wherein the electronic control unit (103) is configured to determine whether the measured electric parameter between the inlet (201) and the outlet (202) is indicative of a leakage by using a model of the cooling circuit (203) to determine an amount of liquid coolant within the cooling circuit (203).

Example 5: The arrangement of example 4, wherein the model is a mathematical model which describes the amount of liquid coolant within the cooling circuit (203) as a polynomial function of the electric parameter measured between the inlet (201) and the outlet (202).

Example 6: The arrangement of example 4 or 5, wherein the electronic control unit (103) is configured to detect a leakage of the liquid coolant from the cooling circuit (203) by comparing the determined amount of liquid coolant to a threshold value.

Example 7: The arrangement of any of examples 1-3, wherein the electronic control unit (103) is configured to determine whether the measured electric parameter between the inlet (201) and the outlet (202) is indicative of a leakage by using predetermined reference data relating the measured electric parameter to an amount of liquid coolant.

Example 8: The arrangement of any of the preceding examples, wherein the sensor assembly is configured to continuously monitor the electric parameter between the inlet (201) and the outlet (202), or to measure the electric parameter between the inlet (201) and the outlet (202) with a predetermined frequency.

Example 9: The arrangement of any of the preceding examples, wherein the electronic control unit (103) is further configured to determine an amount of liquid coolant leakage from the cooling circuit (203) based on the measured electric parameter.

Example 10: The arrangement of any one of the preceding examples, wherein the arrangement (100) is configured to be used for detecting leakage from the cooling circuit (203) while liquid coolant is circulated through the cooling circuit (203).

Example 11: The arrangement of any one of the preceding examples, wherein the cooling circuit (203) is configured for cooling of a battery pack (300).

Example 12: A cooling system comprising a cooling circuit (203) having an inlet (201) and an outlet (202), and the arrangement (100) of any one of examples 1-11, the first probe (101) being positioned in the inlet (201) and the second probe (102) being positioned in the outlet (202).

Example 13: A battery pack (300) comprising a plurality of battery cells (301), a cooling circuit (203) configured to cool the plurality of battery cells (301) and having an inlet (201) and an outlet (202) for circulating liquid coolant through the cooling circuit (203), and the arrangement (100) of any one of examples 1-11 configured to detect leakage of the liquid coolant from the cooling circuit (203).

Example 14: A vehicle (1) comprising the cooling system (200) according to example 12, and/or the battery pack (300) according to example 13.

Example 15: A method for detecting leakage of a liquid coolant from a cooling circuit (203), comprising:

- measuring (S 1) an electric parameter between an inlet (201) and an outlet (202) of the cooling circuit (203) using a sensor assembly comprising a pair of probes (101, 102),
- in an electronic control unit (103), receiving (S2) data comprising the measured electric parameter from the sensor assembly (104), and
- in the electronic control unit (103), determining (S3) whether the measured electric parameter between the inlet (201) and the outlet (202) is indicative of a leakage of liquid coolant from the cooling circuit (203).

Example 16: The method according to example 15, wherein determining whether the measured electric parameter between the inlet (201) and the outlet (202) is indicative of a leakage comprises using a model of the cooling circuit (203) to determine an amount of liquid coolant within the cooling circuit (203).

Example 17: The method according to example 15 or 16, further comprising, in the electronic control unit (103), determining an amount of liquid coolant leakage from the cooling circuit (203) based on the measured electric parameter.

Example 18: The method according to any one of examples 15-17, wherein the sensor assembly continuously monitors the electric parameter between the inlet (201) and the outlet (202), or wherein the sensor assembly measures the electric parameter between the inlet (201) and the outlet (202) with a predetermined frequency.

Example 19: The method according to any one of examples 15-18, wherein the method is performed while liquid coolant is circulated through the cooling circuit (203).

The terminology used herein is for the purpose of describing particular aspects only and is not intended to be limiting of the disclosure. As used herein, the singular forms "a", "an" and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1.  An arrangement (100) configured to detect leakage of a liquid coolant from a cooling circuit (203), the arrangement (100) comprising:

    - a sensor assembly (104) configured to measure an electric parameter between an inlet (201) and an outlet (202) of the cooling circuit (203), the electric parameter being dependent on an amount of liquid coolant present between the inlet (201) and the outlet (202), wherein the sensor assembly (104) comprises a pair of probes (101, 102), and
    - an electronic control unit (103) configured to receive data comprising the measured electric parameter from the sensor assembly (101, 102) and to determine whether the measured electric parameter between the inlet (201) and the outlet (202) is indicative of a leakage of liquid coolant from the cooling circuit (203).

2.  The arrangement of claim 1, wherein the pair of probes (101, 102) comprises a first probe (101) configured to be positioned in the inlet (201) of the cooling circuit (203) and a second probe (102) configured to be positioned in the outlet (202) of the cooling circuit (203).

3.  The arrangement of claim 2, wherein the sensor assembly (104) is a voltage sensor assembly.

4.  The arrangement of any of the preceding claims, wherein the electronic control unit (103) is configured to determine whether the measured electric parameter between the inlet (201) and the outlet (202) is indicative of a leakage by using a model of the cooling circuit (203) to determine an amount of liquid coolant within the cooling circuit (203).

5.  The arrangement of claim 4, wherein the model is a mathematical model which describes the amount of liquid coolant within the cooling circuit (203) as a polynomial function of the electric parameter measured between the inlet (201) and the outlet (202).

6.  The arrangement of claim 4 or 5, wherein the electronic control unit (103) is configured to detect a leakage of the liquid coolant from the cooling circuit (203) by comparing the determined amount of liquid coolant to a threshold value.

7.  The arrangement of any of claims 1-3, wherein the electronic control unit (103) is configured to determine whether the measured electric parameter between the inlet (201) and the outlet (202) is indicative of a leakage by using predetermined reference data relating the measured electric parameter to an amount of liquid coolant.

8. The arrangement of any of the preceding claims, wherein the sensor assembly (104) is configured to continuously monitor the electric parameter between the inlet (201) and the outlet (202), or to measure the electric parameter between the inlet (201) and the outlet (202) with a predetermined frequency.

9. The arrangement of any of the preceding claims, wherein the electronic control unit (103) is further configured to determine an amount of liquid coolant leakage from the cooling circuit (203) based on the measured electric parameter.

10. The arrangement of any one of the preceding claims, wherein the arrangement (100) is configured to be used for detecting leakage from the cooling circuit (203) while liquid coolant is circulated through the cooling circuit (203).

11. The arrangement of any one of the preceding claims, wherein the cooling circuit (203) is configured for cooling of a battery pack (300).

12. A cooling system comprising a cooling circuit (203) having an inlet (201) and an outlet (202), and the arrangement (100) of any one of claims 1-11, the first probe (101) being positioned in the inlet (201) and the second probe (102) being positioned in the outlet (202).

13. A battery pack (300) comprising a plurality of battery cells (301), a cooling circuit (203) configured to cool the plurality of battery cells (301) and having an inlet (201) and an outlet (202) for circulating liquid coolant through the cooling circuit (203), and the arrangement (100) of any one of claims 1-11 configured to detect leakage of the liquid coolant from the cooling circuit (203).

14. A vehicle (1) comprising the cooling system (200) according to claim 12, and/or the battery pack (300) according to claim 13.

15. A method for detecting leakage of a liquid coolant from a cooling circuit (203), comprising:

   - measuring (S1) an electric parameter between an inlet (201) and an outlet (202) of the cooling circuit (203) using a sensor assembly (104) comprising a pair of probes (101, 102),
   - in an electronic control unit (103), receiving (S2) data comprising the measured electric parameter from the sensor assembly (104), and
   - in the electronic control unit (103), determining (S3) whether the measured electric parameter between the inlet (201) and the outlet (202) is indicative of a leakage of liquid coolant from the cooling circuit (203).

1

300

Fig. 1

Fig. 2

Fig. 3

S1

S2

S3

Fig. 4

400

404

408

412

410

416 418

402

406

414

420

422

424

426

Fig. 5

**EUROPEAN SEARCH REPORT**

Application Number

EP 23 18 3375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/161952 A1 (BUVID DANIEL J [US] ET AL) 9 June 2016 (2016-06-09) | 1-4, 6-10,12, 15 | INV. G01M3/18 B60L58/26 |
| Y<br>A | * figure 2 *<br>* paragraph [0001] - paragraph [0004] *<br>* paragraph [0023] * | 11,13,14<br>5 | H01M10/613 |
| Y | US 2020/240869 A1 (YESH KENNETH [US] ET AL) 30 July 2020 (2020-07-30)<br>* paragraph [0001] - paragraph [0005] *<br>* paragraph [0037] * | 11,13,14 | |
| A | CN 103 538 489 B (GM GLOBAL TECH OPERATIONS INC) 4 May 2016 (2016-05-04)<br>* the whole document * | 1-15 | |
| A | US 2014/015511 A1 (MATTHE ROLAND [DE] ET AL) 16 January 2014 (2014-01-16)<br>* figure 1 *<br>* paragraphs [0009], [0021] * | 1-15 | |

TECHNICAL FIELDS
SEARCHED (IPC)

G01M
B60L
H01M

The present search report has been drawn up for all claims

| Place of search | Date of completion of the search | Examiner |
|---|---|---|
| The Hague | 1 December 2023 | Nierhaus, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

**EP 23 18 3375**

This annex lists the patent family members relating to the patent documents cited in the above-mentioned European search report.
The members are as contained in the European Patent Office EDP file on
The European Patent Office is in no way liable for these particulars which are merely given for the purpose of information.

**01-12-2023**

| Patent document cited in search report | | Publication date | Patent family member(s) | | Publication date |
|---|---|---|---|---|---|
| US 2016161952 | A1 | 09-06-2016 | NONE | | |
| US 2020240869 | A1 | 30-07-2020 | CN | 111497619 A | 07-08-2020 |
| | | | DE | 102020102040 A1 | 30-07-2020 |
| | | | US | 2020240869 A1 | 30-07-2020 |
| CN 103538489 | B | 04-05-2016 | CN | 103538489 A | 29-01-2014 |
| | | | DE | 102013212859 A1 | 23-01-2014 |
| | | | US | 2014020763 A1 | 23-01-2014 |
| US 2014015511 | A1 | 16-01-2014 | CN | 103542986 A | 29-01-2014 |
| | | | DE | 102013105041 A1 | 16-01-2014 |
| | | | US | 2014015511 A1 | 16-01-2014 |

EPO FORM P0459

For more details about this annex : see Official Journal of the European Patent Office, No. 12/82